# EUROPEAN PATENT SPECIFICATION

(11) **EP 3 133 251 B1**
(45) Date of publication and mention of the grant of the patent: **28.10.2020**
(21) Application number: 16184364.4
(22) Date of filing: 16.08.2016
(51) Int. Cl.: F01D 11/08, F01D 11/12, F01D 11/18, F01D 25/00

(54) **BLADE OUTER AIR SEAL COMPONENT WITH VARYING THERMAL EXPANSION COEFFICIENT**
ÄUSSERE LAUFSCHAUFELLUFTDICHTUNGSKOMPONENTE MIT UNTERSCHIEDLICHEN WÄRMEAUSDEHNUNGSKOEFFIZIENTEN
COMPOSANT D'ÉTANCHÉITÉ À L'AIR EXTÉRIEUR DE LAME AVEC UN COEFFICIENT DE DILATATION THERMIQUE VARIABLE

(30) Priority: 17.08.2015 US 201514828089
(43) Date of publication of application: 22.02.2017
(73) Proprietor: United Technologies Corporation, Farmington, CT 06032 (US)
(72) Inventor: SLAVENS, Thomas, Moodus, CT Connecticut 06469 (US); SNYDER, Brooks, Glastonbury, CT Connecticut 06033 (US)
(74) Representative: Dehns

(56) References cited:
- EP-A1- 0 185 603
- EP-A2- 0 965 730
- US-A- 4 503 130
- US-A1- 2013 170 963

## Description

### BACKGROUND

This disclosure relates generally to a blade outer air seal ("BOAS"). More particularly, this disclosure relates to a BOAS having regions with different thermal expansion coefficients to facilitate uniform wear of a rub surface of the BOAS.

Gas turbine engines typically include a compressor section, a combustor section, and a turbine section. During operation, air is pressurized in the compressor section and is mixed with fuel and burned in the combustor section to generate hot combustion gases. The hot combustion gases are communicated through the turbine section, which extracts energy from the hot combustion gases to power the compressor section and other gas turbine engine loads.

The compressor and turbine sections of a gas turbine engine typically include alternating rows of rotating blades and stationary vanes. The blades rotate and extract energy from the hot combustion gases that are communicated through the gas turbine engine. The turbine vanes prepare the airflow for the next set of blades.

Tips of the blades interface with the BOAS. Thermal energy can cause the BOAS to expand and contract radially relative to the blades, which can cause undesirable non-uniform wear of rub surfaces of the BOAS. Blade outer air seals are disclosed in US 2013/170963, EP 0965730 and EP 0185603.

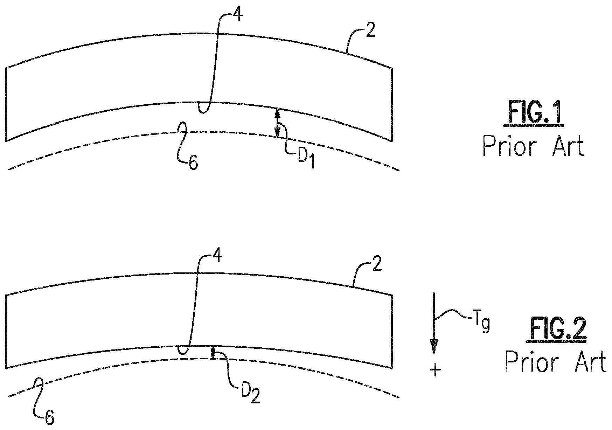

Referring to prior art FIG. 1, a schematic view of an axially facing side of a prior art BOAS 2 is shown when the BOAS 2 is in a relatively low temperature environment. The BOAS 2 has a rub surface 4 positioned a distance D₁ from a blade path 6. The distance D₁ is consistent along the rub surface 4 when the BOAS 2 is at the relatively low temperature. (The rub surface 4 is circumferentially swept over a tip of a rotating blade that will interface with the rub surface 4.)

Referring now to FIG. 2, the prior art BOAS 2 is shown at a relatively high temperature, within an operating engine, for example. The rub surface 4 is exposed to higher temperatures than other areas of the BOAS 2, which causes a radially extending temperature gradient T_{g} through the BOAS 2. The areas of the BOAS 2 near the rub surface can be several hundred degrees hotter than the radially outer areas of the BOAS 2.

In response to the higher temperature, areas of the BOAS 2 near the rub surface 4 expand more than areas of the BOAS 2 further from the rub surface 4. This causes the BOAS 2 to flex and flatten toward the blade path 6 so that a distance D₂ between the rub surface 4 and the blade path 6 varies, which can undesirably lead to uneven wear and impact performance.

US 4,503,130 discloses a structure coated with graded ceramic material.

### SUMMARY

A blade outer air seal component according to an exemplary aspect of the present disclosure includes, among other things, at least one first region of a first material, at least one second region of a second material, and at least one functionally graded transition region of the first material and the second material between said at least one first region and said at least one second region of the component. A thermal expansion coefficient of the first material is higher than a thermal expansion coefficient of the second material. The at least one first region provides an attachment structure that secures the composite blade outer air seal to a casing; the at least one second region provides a blade interface surface that interfaces with a blade tip; and the first, second and transition regions each extend axially from a leading edge to a trailing edge of the blade outer air seal component. The first material is a metal. The second material is a ceramic matrix composite.

In a further non-limiting embodiment of any of the foregoing components, the component is formed by a solid freeform (SFF) additive manufacturing process.

In a further non-limiting embodiment of any of the foregoing components, the solid freeform (SFF) additive manufacturing process is selective laser melting (SLM).

In a further non-limiting embodiment of any of the foregoing components, the first region is radially outside the second region.

In a further non-limiting embodiment of any of the foregoing components, the metal is selected from the group consisting of nickel base, iron base, cobalt base superalloy, titanium, and titanium alloy.

In a further non-limiting embodiment of any of the foregoing components, the ceramic matrix composite is selected from the group consisting of SiC/SiC, C/SiC, and SiC/Si.

A method of forming a blade outer air seal (e.g. a blade outer air seal as described herein) containing separate regions of different materials according to an exemplary aspect of the present disclosure includes, among other things, forming at least one first region of a first material, forming a graded transition region on said at least one first region with composition of the transition region changing from a first material to a second material as the forming of the transition region progresses, and forming a second region of a second material on the transition region. A thermal expansion coefficient of the first material is higher than a thermal expansion coefficient of the second material. The method further includes holding the composite blade outer air seal using an attachment structure provided by a portion of the first region, and interfacing with a blade tip with a surface of the second region. The first, second and transition regions each extend axially from a leading edge to a trailing edge of the blade outer air seal component. The first material is a metal. The second material is a ceramic matrix composite.

In a further non-limiting embodiment of any of the foregoing methods, forming comprises solid freeform (SFF) additive manufacturing.

In a further non-limiting embodiment of any of the foregoing methods, additive manufacturing comprises direct laser melting.

In a further non-limiting embodiment of any of the foregoing methods, the metal is selected from a group consisting of nickel base, iron base and cobalt base superalloy, titanium and titanium alloy.

In a further non-limiting embodiment of any of the foregoing methods, the ceramic matrix composite is selected from the group consisting of SiC/SiC, C/SiC, and SiC/Si.

### DESCRIPTION OF THE FIGURES

The various features and advantages of the disclosed examples will become apparent to those skilled in the art from the detailed description. The figures that accompany the detailed description can be briefly described as follows:
FIG. 1 illustrates a schematic view of an axially facing side of a prior art BOAS at a relatively low temperature.
FIG. 2 illustrates the prior art BOAS of FIG. 1 when exposed to relatively high temperatures.
FIG. 3 illustrates an exemplary gas turbine engine.
FIG. 4 illustrates an axial section of a portion of the engine of FIG. 3 showing a selected BOAS and a selected blade.
FIG. 5 illustrates a close-up view of the BOAS of FIG. 4.

### DETAILED DESCRIPTION

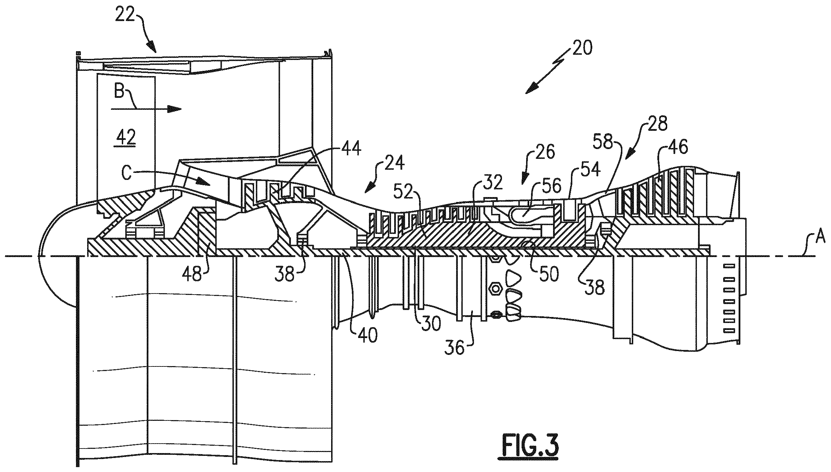

Referring to FIG. 3 a gas turbine engine 20 is disclosed as a two-spool turbofan that generally incorporates a fan section 22, a compressor section 24, a combustor section 26, and a turbine section 28.

The fan section 22 drives air along a bypass flow path B in a bypass duct defined within a nacelle, while the compressor section 24 drives air along a core flow path C for compression and communication into the combustor section 26, and then expansion through the turbine section 28. Although depicted as a two-spool turbofan gas turbine engine in the disclosed non-limiting embodiment, the examples herein are not limited to use with two-spool turbofans and may be applied to other types of turbomachinery, including direct drive engine architectures, three-spool engine architectures, and ground-based turbines.

The engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48, to drive the fan 42 at a lower speed than the low speed spool 30.

The high speed spool 32 includes an outer shaft 50 that interconnects a second (or high) pressure compressor 52 and a second (or high) pressure turbine 54. A combustor 56 is arranged between the high pressure compressor 52 and the high pressure turbine 54. A mid-turbine frame 58 of the engine static structure 36 is arranged generally between the high pressure turbine 54 and the low pressure turbine 46. The mid-turbine frame 58 further supports the bearing systems 38 in the turbine section 28. The inner shaft 40 and the outer shaft 50 are concentric and rotate via bearing systems 38 about the engine central longitudinal axis A, which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 58 includes airfoils, which are in the core airflow path C.

The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines, including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet. The flight condition of 0.8 Mach and 35,000 ft, with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150 ft / second.

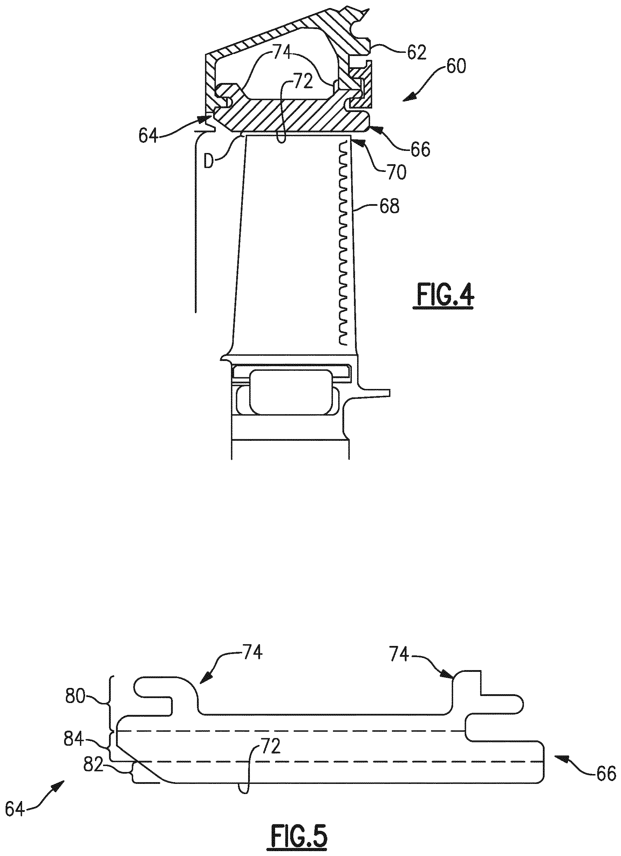

Referring now to FIG. 4 with continuing reference to FIG. 3, an example blade outer air seal (BOAS) structure 60 is suspended from an outer casing 62 of the gas turbine engine 20. In this example, the BOAS structure 60 is located within the high pressure turbine section 24 of the gas turbine engine 20. The BOAS structure 60 is a component of the gas turbine engine 20, and can be a composite component.

The BOAS structure 60 extends generally axially from a leading edge portion 64 to a trailing edge portion 66. The BOAS structure 60 interfaces with a blade 68 of the high pressure turbine section 24. The blade 68 is part of a rotatable blade array.

During operation, a tip section 70 of the blade 68 seals against a radially inwardly facing surface 72 of the BOAS structure 60. The surface 72 is considered a rub surface in some examples. An attachment structure 74, including hooks in this example, engages the outer casing 62 to hold the BOAS structure 60 relative to the blade 68. The BOAS structure 60 is exposed to high temperatures within the engine 20.

Referring now to FIG. 5, the BOAS structure 60 includes a first region 80, a second region 82, and a third region 84. The first region 80 is a first material, namely a metal. The second region 82 is a second material, namely a ceramic matrix composite. The third region 84 is a functionally graded transition region that includes some of the first material and some of the second material. The first region 80, the second region 82, and the third region 84 each extend axially from the leading edge portion 64 to the trailing edge portion 66. The first region 80, the second region 82, and the third region 84 are radially stacked in this example.

The BOAS structure 60 can be formed by a solid free form (SFF) additive manufacturing process, such as a selective laser melting (SLM) using powder bed fusion technology. SLM permits a material grading of the BOAS structure 60 that can be adjusted for both joint integrity and material characteristic optimization.

A person having skill in this art and the benefit of this disclosure could understand processes, such as SLM, and other SFF processes appropriate for forming the BOAS structure 60.

Notably, the first material and the second material are selected, in part, based on thermal expansion coefficients. In this example, a thermal expansion coefficient of the first material of the first region 80 is higher than a thermal expansion coefficient of the second material of the second region 82. Because the third region 84 includes the first material and the second material, the third region 84 represents a transition in a thermal expansion coefficient from the thermal expansion coefficient of the first material to the thermal expansion coefficient of the second material.

The first material is a metal, for example, selected from a group consisting of nickel base, iron base, cobalt base superalloy, titanium, titanium alloy, or some combination of these. A ceramic matrix composite is used as the second material, and the ceramic matrix composite can be selected from a group of materials consisting of SiC/SiC, C/SiC, SiC/Si, or some combination of these.

During operation, the second region 82 is exposed to higher temperatures than the first region 80. The material of the first region 80 has a coefficient of thermal expansion that is higher than the coefficient of thermal expansion of the second region 82. Thus, the material of the first region 80 expands more rapidly in response to temperature increases than the material of the second region 82.

The exemplary third region 84 represents a graded mixture region providing a transition between the first region 80 and the second region 82. The third region 84 can consist of multiple intermediate zones having varied proportions of the first material and the second material. The third region 84 can be matched and graded moving radially through the BOAS structure 60 such that the thermal stresses within the third region 84 are gradually matched radially.

A material composition of the layers of the graded mixture of the third region 84 can be controlled by a mixing parameter tied to a build layer. The alignment of the part relative to the layer-by-layer additive manufacturing process is done such that the material gradient coincides with the build direction. In turn, the mixing parameter is then adjusted during the layering process to provide a functionally graded region between the materials. This can be controlled through secondary meta data characteristics tied to a layer data file within the machine controlling computer.

Controlling of the layers of the third region 84 in this way can facilitate an additive build of the BOAS structure 60, which can be tuned to address design considerations, and particularly the thermal gradient that the BOAS structure 60 is exposed to within the engine 20. The transition of material from the material of the first region 80 to the material of the second region 82 can occur gradually and without distinct relatively planar boundaries, and with full design control to a tolerance of build depth. Full design control means, for example, that a designer can control a characteristic of the part to within the tolerance capability of the process.

The regions of the BOAS structure 60 are designed and mixed so that the BOAS structure expands and contracts during operation while maintaining a relatively consistent distance D between the rub surface 72 and the tip section 70 of the blade. This can counteract non-uniform wear of the rub surface 72.

Features of the disclosed examples include a BOAS structure with decreased deflection during operation due to thermal gradients across the BOAS structure, which can decrease rub track non-uniformities. Decreases in non-uniformities can decrease the need for film cooling and allow for cooling reductions. In an aspect of the disclosure which is not according to the claimed invention, high temperature ceramics can be used for the second material of the second region 82 and a relatively high strength metallic material can be used for the material of the first region 80 allowing for further reductions in required cooling flow.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. A blade outer air seal component (60) for a gas turbine engine, comprising:
at least one first region (80) of a first material;
at least one second region (82) of a second material; and
at least one functionally graded transition region (84) of the first material and the second material between said at least one first region (80) and said at least one second region (82) of the component (60), wherein a thermal expansion coefficient of the first material is higher than a thermal expansion coefficient of the second material;
wherein:
said at least one first region (80) provides an attachment structure (74) that secures the composite blade outer air seal (60) to a casing (62); and
said at least one second region (82) provides a blade interface surface (72) that interfaces with a blade tip (70);
**characterized in that** said first (80), second (82) and transition (84) regions each extend axially from a leading edge (64) to a trailing edge (66) of the blade outer air seal component, the first material is a metal, and the second material is a ceramic matrix composite.

2. The component of the preceding claim, wherein the first region (80) is radially outside the second region (82).

3. The component of claim 1 or claim 2, wherein the metal is selected from the group consisting of nickel base, iron base, cobalt base superalloy, titanium, and titanium alloy.

4. The component of any one of the preceding claims,
wherein the ceramic matrix composite is selected from the group consisting of SiC/SiC, C/SiC, and SiC/Si.

5. A method of forming a blade outer air seal (60) for a gas turbine engine containing separate regions of different materials comprising:
forming at least one first region (80) of a first material;
forming a graded transition region (84) on said at least one first region (80) with composition of the transition region changing from a first material to a second material as the forming of the transition region (84) progresses; and
forming a second region (82) of a second material on the transition region (84), wherein a thermal expansion coefficient of the first material is higher than a thermal expansion coefficient of the second material;
wherein:
said method further comprises holding the composite blade outer air seal (60) using an attachment structure (74) provided by a portion of the first region (80), and interfacing with a blade tip (70) with a surface (72) of the second region;
**characterized in that** said first (80), second (82) and transition (84) regions each extend axially from a leading edge (64) to a trailing edge (66) of the blade outer air seal (60), the first material is a metal and the second material is a ceramic matrix composite.

6. The method of claim 5, wherein forming comprises solid freeform (SFF) additive manufacturing.

7. The method of claim 6 wherein the solid freeform (SFF) additive manufacturing process is selective laser melting (SLM).

8. The method of claim 6, wherein additive manufacturing comprises direct laser melting.

9. The method of claim 5, where the metal is selected from a group consisting of nickel base, iron base and cobalt base superalloy, titanium and titanium alloy.

10. The method of claim 5, wherein the ceramic matrix composite is selected from the group consisting of SiC/SiC, C/SiC, and SiC/Si.

## Patentansprüche

1. Äußere Laufschaufelluftdichtung (60) für ein Gasturbinentriebwerk, Folgendes umfassend:
mindestens einen ersten Bereich (80) aus einem ersten Material;
mindestens einen zweiten Bereich (82) aus einem zweiten Material; und
mindestens einen funktional abgestuften Übergangsereich (84) aus dem ersten Material und dem zweiten Material zwischen dem mindestens einen ersten Bereich (80) und dem mindestens einen zweiten Bereich (82) der Komponente (60), wobei ein Wärmeausdehnungskoeffizient des ersten Materials höher ist als ein Wärmeausdehnungskoeffizient des zweiten Materials;
wobei:
der mindestens eine erste Bereich (80) eine Befestigungsstruktur (74) bereitstellt, die die zusammengesetzte, äußere Laufschaufelluftdichtung (60) an einem Gehäuse (62) befestigt; und
der mindestens eine zweite Bereich (82) eine Laufschaufelschnittstellenfläche (72) bereitstellt, die als Schnittstelle zu einer Laufschaufelspitze (70) dient;
**dadurch gekennzeichnet, dass** sich der erste Bereich (80), der zweite Bereich (82) und der Übergangsbereich (84) jeweils axial von einer Vorderkante (64) zu einer Hinterkante (66) der äußeren Laufschaufelluftdichtungskomponente erstrecken, wobei das erste Material ein Metall ist und das zweite Material ein keramischer Matrix-Verbundwerkstoff ist.

2. Komponente nach dem vorhergehenden Anspruch, wobei sich der erste Bereich (80) radial außerhalb des zweiten Bereichs (82) befindet.

3. Komponente nach Anspruch 1 oder Anspruch 2, wobei das Metall aus der Gruppe ausgewählt ist, die aus einer Nickelbasis, einer Eisenbasis, einer Superlegierung auf Kobaltbasis, Titan und einer Titanlegierung besteht.

4. Komponente nach einem der vorhergehenden Ansprüche,
wobei der keramische Matrix-Verbundwerkstoff aus der Gruppe ausgewählt ist, die aus SiC/SiC, C/SiC und SiC/Si besteht.

5. Verfahren zur Herstellung einer äußeren Laufschaufelluftdichtung (60) für ein Gasturbinentriebwerk, das separate Bereiche aus unterschiedlichen Materialien enthält, Folgendes umfassend:
Herstellen mindestens eines ersten Bereichs (80) aus einem ersten Material;
Herstellen eines abgestuften Übergangsbereichs (84) an dem mindestens einen ersten Bereich (80), wobei sich die Zusammensetzung des Übergangsbereichs von einem ersten Material zu einem zweiten Material ändert, während das Herstellen des Übergangsbereichs (84) fortschreitet; und
Herstellen eines zweiten Bereichs (82) aus einem zweiten Material an dem Übergangsbereich (84), wobei ein Wärmeausdehnungskoeffizient des ersten Materials höher ist als ein Wärmeausdehnungskoeffizient des zweiten Materials;
wobei:
das Verfahren ferner umfasst, dass die zusammengesetzte, äußere Laufschaufelluftdichtung (60) durch Verwenden einer Befestigungsstruktur (74) gehalten wird, die durch einen Abschnitt des ersten Bereichs (80) bereitgestellt wird und als Schnittstelle zu einer Laufschaufelspitze (70) mit einer Fläche (72) des zweiten Bereichs dient;
**dadurch gekennzeichnet, dass** sich der erste Bereich (80), der zweite Bereich (82) und der Übergangsbereich (84) jeweils axial von einer Vorderkante (64) zu einer Hinterkante (66) der äußeren Laufschaufelluftdichtung (60) erstrecken, wobei das erste Material ein Metall ist und das zweite Material ein keramischer Matrix-Verbundwerkstoff ist.

6. Verfahren nach Anspruch 5, wobei das Herstellen ein additives Fertigen mit fester Freiform (SFF) umfasst.

7. Verfahren nach Anspruch 6, wobei der Prozess der additiven Fertigung mit fester Freiform (SFF) selektives Laserschmelzen (SLM) ist.

8. Verfahren nach Anspruch 6, wobei die additive Fertigung direktes Laserschmelzen umfasst.

9. Verfahren nach Anspruch 5, wobei das Metall aus einer Gruppe ausgewählt ist, die aus einer Nickelbasis, einer Eisenbasis, einer Superlegierung auf Kobaltbasis, Titan und einer Titanlegierung besteht.

10. Verfahren nach Anspruch 5, wobei der keramische Matrix-Verbundwerkstoff aus der Gruppe ausgewählt ist, die aus SiC/SiC, C/SiC und SiC/Si besteht.

## Revendications

1. Composant d'étanchéité à l'air extérieur pour une aube (60) pour un moteur à turbine à gaz, comprenant :
au moins une première région (80) d'un premier matériau ;
au moins une seconde région (82) d'un second matériau ; et
au moins une région de transition à gradient fonctionnel (84) du premier matériau et du second matériau entre ladite au moins une première région (80) et ladite au moins une seconde région (82) du composant (60), dans lequel un coefficient de dilatation thermique du premier matériau est supérieur à un coefficient de dilatation thermique du second matériau ;
dans lequel :
ladite au moins une première région (80) fournit une structure de fixation (74) qui fixe le joint d'étanchéité à l'air extérieur pour une aube (60) composite à un carter (62) ; et
ladite au moins une seconde région (82) fournit une surface d'interface d'aube (72) qui assure l'interface avec une pointe d'aube (70) ;
**caractérisé en ce que** ladite première région (80), ladite seconde région (82) et ladite région de transition (84) s'étendent chacune axialement depuis un bord d'attaque (64) vers un bord de fuite (66) du composant d'étanchéité à l'air extérieur pour une aube, **en ce que** le premier matériau est un métal et **en ce que** le second matériau est un composite à matrice céramique.

2. Composant selon la revendication précédente, dans lequel la première région (80) est radialement à l'extérieur de la seconde région (82).

3. Composant selon la revendication 1 ou la revendication 2, dans lequel le métal est choisi dans le groupe constitué d'une base de nickel, d'une base de fer, d'un superalliage à base de cobalt, de titane et d'un alliage de titane.

4. Composant selon l'une quelconque des revendications précédentes,
dans lequel le composite à matrice céramique est choisi dans le groupe constitué de SiC/SiC, C/SiC et SiC/Si.

5. Procédé de formation d'un joint d'étanchéité à l'air extérieur pour une aube (60) pour un moteur à turbine à gaz contenant des régions séparées de matériaux différents comprenant :
la formation d'au moins une première région (80) d'un premier matériau ;
la formation d'une région de transition à gradient (84) sur ladite au moins une première région (80), la composition de la région de transition passant d'un premier matériau à un second matériau à mesure que la formation de la région de transition (84) progresse ; et
la formation d'une seconde région (82) d'un second matériau sur la région de transition (84), dans lequel un coefficient de dilatation thermique du premier matériau est supérieur à un coefficient de dilatation thermique du second matériau ;
dans lequel :
ledit procédé comprend en outre le maintien du joint d'étanchéité à l'air extérieur pour une aube (60) composite à l'aide d'une structure de fixation (74) fournie par une partie de la première région (80), et l'interfaçage avec une pointe d'aube (70) avec une surface (72) de la seconde région ;
**caractérisé en ce que** ladite première région (80), ladite seconde région (82) et ladite région de transition (84) s'étendent chacune axialement depuis un bord d'attaque (64) vers un bord de fuite (66) du joint d'étanchéité à l'air extérieur pour une aube (60), **en ce que** le premier matériau est un métal et **en ce que** le second matériau est un composite à matrice céramique.

6. Procédé selon la revendication 5, dans lequel la formation comprend la fabrication additive de forme libre solide (SFF).

7. Procédé selon la revendication 6, dans lequel le processus de fabrication additive de forme libre solide (SFF) est une fusion laser sélective (SLM).

8. Procédé selon la revendication 6, dans lequel la fabrication additive comprend la fusion laser directe.

9. Procédé selon la revendication 5, dans lequel le métal est choisi dans un groupe constitué d'une base de nickel, d'une base de fer et d'un superalliage à base de cobalt, de titane et d'un alliage de titane.

10. Procédé selon la revendication 5, dans lequel le composite à matrice céramique est choisi dans le groupe constitué de SiC/SiC, C/SiC et SiC/Si.
